# EUROPEAN PATENT SPECIFICATION

(11) **EP 3 268 546 B1**
(45) Date of publication and mention of the grant of the patent: **27.11.2019**
(21) Application number: 16712516.0
(22) Date of filing: 26.02.2016
(51) Int. Cl.: E03C 1/04, E03D 9/08, F03B 13/00, F21V 33/00, F21S 9/04, B05B 1/18, B05B 15/00

(54) **WATER PLUG WITH CARTRIDGE**
WASSERSTOPFEN MIT PATRONE
BOUCHON D'EAU AVEC CARTOUCHE

(30) Priority: 10.03.2015 IT BS20150038
(43) Date of publication of application: 17.01.2018
(73) Proprietor: Nikles Tec Italia S.r.l., 25013 Carpenedolo Brescia (IT)
(72) Inventor: NIKLES, Gerhard, I-25013 Carpenedolo (Brescia) (IT)
(74) Representative: Chimini, Francesco
(86) International application number: PCT/IB2016/051075
(87) International publication number: WO 2016/142801

(56) References cited:
- EP-A2- 2 896 757
- WO-A1-2008/107052
- US-A- 4 616 298
- US-A1- 2008 225 517
- US-A1- 2011 220 735
- US-A1- 2011 259 454
- US-A1- 2012 170 424
- US-A1- 2014 246 099
- US-A1- 2014 268 650
- US-B1- 8 686 586

## Description

This invention relates to a water socket for a dispensing devicein the form of a shower head or a bidet shower, for a dispenser for sink and the like, and suitable to generate a sound, light, olfactory or other kind of effect perceptible by a user. A shower nozzle holder device according to the prior art is disclosed in document US 2011/0259454 A1.

In the following description, such effect produced by the cartridge will also be defined in general as a "secondary effect" to distinguish it from the primary effect of dispensing a jet of water.

Devices are already known that dispense a jet of water, in particular of shower heads and faucets, provided with light sources suitable to emit a light effect while dispensing a jet of water. In a widespread embodiment, the light sources, for example of the LED type, are powered by an electric battery, also housed in the body of the dispensing device.

In addition, devices are already known that dispense a jet of water, in particular of shower heads, provided with speaker for listening to music while showering. In a widespread embodiment, the speaker is powered by an electric battery, also housed in the body of the dispensing device. Examples of this technical solution are described in WO2013/036631 and in EP1686770A1.

A drawback of supplying electricity with a battery lies in the fact that its replacement or recharging, when discharged, is by no means easy, in particular in the case of a shower head by virtue of its positioning at a certain height from the ground.

Document US5140254 describes a shower head of a shower provided with a speaker and a turbine generator capable of generating the electricity necessary for the operation of the speaker when a water flow hits the generator. Such a technical solution solves the problem of replacing or recharging the batteries. However, the structure, the shape and size of the dispensing device are heavily affected by the presence of the turbine generator, due to which such a device has had a poor reception from the market.

In addition, devices are known for dispensing a jet of water provided with light sources powered by the domestic electric network through a power supply cable. This solution solves the problem of replacing or recharging the batteries, but considerably complicates the structure and installation of the dispensing device since it is necessary to provide the watertight space for the passage of electrical cables and associated connecting elements. Moreover, in case of failure of the electrical part, it is difficult to identify where such a fault has occurred and if necessary repair it.

The purpose of this invention is to propose a water socket provided with at least one electronic device suitable to generate a secondary effect perceptible by a user and powered by a generator driven by the water flow, so as to allow the simple application of a secondary effect to any existing dispensing device.

This purpose is achieved through the use of a water socket according to claim 1. The dependent claims describe preferred embodiments of the invention.

According to the claim, a water socket 60 for a dispensing device in the form of a shower head or of a bidet shower, comprises a first water connection element 206 to a water supply pipe, a device body 201, and a second water connection element 202 fluidically connected with said first water connection element and defining at least one supply passage 214 of the dispensing device. In this body, a cartridge seat 222 is formed, which communicates with the first 206 and the second 202 water connection element and accommodates at least one cartridge 100, 1000. The latter includes a cartridge body 101, which defines a first 20 and a second 22 compartment, said second compartment being separated from said first compartment by a watertight separation septum 24, an inlet opening 16 being formed in the cartridge body for the entry of a flow of water inside the first compartment 20, and at least one outlet opening 18 open towards the outside for the outflow of the water flow from the first compartment 20, a current generator 1, housed in the first compartment 20 and suitable to be actuated by a flow of water that passes through said first compartment from the inlet opening to the outlet opening, and at least one electronic device 11, 1002 housed in the second compartment 22 and suitable to generate a secondary effect perceptible by a user, such electronic device being electrically powered by the current generator, the second compartment 22 being separated from the external environment by a separation element 13, 1004 suitable to allow the transmission of the secondary effect to the outside.

The cartridge 100, 1000 is housed in the cartridge seat 222 in a releasable manner.

In an embodiment, the first water connection element (206) comprises a hollow fitting, threaded on the inside or on the outside, for the connection of the supply pipe.

According to the invention, the second water connection element 202 comprises a threaded hollow fitting for connection of a dispensing device in the form of a shower head or bidet shower through a hose.

In an embodiment, the supply passage 214, an inlet passage 216 identified by the first water connection element 206 and a cartridge axis X (specifically: an axis X along which the aforesaid cartridge extends) extend at least partly along mutually incident directions P1, P2, X.

More precisely, the directions P1, P2 of the supply passage 214 and the inlet passage 216 are substantially orthogonal to each other.

In an embodiment, the device body 201 defines an abutment plane R with a support surface (for example a wall in contact with said plane), and defines a secondary surface 218 through which the secondary effect is transmitted to the exterior, said secondary surface 218 being oriented in a manner incident to said plane R so that the secondary effect is spread away from the latter.

In an embodiment, the electronic device comprises a light source 11, the second compartment 22 being closed by an optical element 13 suitable to allow the emission of a light beam produced by the light source.

In an embodiment, the electronic device comprises a speaker 1002, the second compartment 22 communicating with the exterior through a perforated plate 1004 suitable to allow the emission of sound from the speaker.

In an embodiment, water outlet opening 18 is directed radially with respect to a cartridge axis X, where the inlet opening 16 and the separation element 13, 1004 are provided at opposite ends of the cartridge body.

In an embodiment, the current generator 1 is inserted in a generator housing 7 provided with inlet passages 17 for the flow of water coming from the inlet opening, and outlet passages in fluidic communication with the outlet opening 18.

In an embodiment, the light source 11 comprises a plurality of LED point sources mounted on an electronic board 11'.

In an embodiment, the second compartment houses a buffer battery 8, 1008 to power the electronic device 11, 1002.

In an embodiment, a plurality of apertures 12' are formed in the lower side of the separation element 13, 1004, suitable to be engaged by the teeth of a tool usable to screw/unscrew the cartridge to/from the water socket 60.

According to various embodiments, the secondary effect comprises a light effect, a sound effect, an olfactory effect, a massaging effect and a treatment effect of the user with ultraviolet light.

Further characteristics and advantages of the water socket incorporating a cartridge will, in any case, be evident from the following description of its preferred embodiments, provided by way of a non-limiting example, with reference to the accompanying figures, in which:
- Figures 1 and 1a are perspective views, respectively from below and above, of a cartridge in a first embodiment suitable for creating light effects;
- Figure 2 is a cross-section of the cartridge of Figures 1 and 1a;
- Figures 3 and 3a are perspective views, respectively from below and above, of a cartridge in a second embodiment, suitable for creating sound effects;
- Figure 4 is a cross-section of the cartridge of Figures 3 and 3a;
- Figures 5, 6 and 7 respectively illustrate a perspective view from below, a side view and a rear view of a water socket housing the aforesaid cartridge;
- Figure 8 shows a section of the water socket of Figure 7, along the plane VIII-VIII indicated in such figure.

In said drawings, the reference numbers 100, 1000 indicate, as a whole, a cartridge according to the invention in two embodiments. In a first embodiment, the cartridge 100 is suitable to generate light effects; in a second embodiment, the cartridge 1000 is suitable to generate sound effects and can be defined a speaker cartridge. As it will be described below, apart from the different electronic devices they contain, the two cartridges are identical to each other and therefore perfectly interchangeable. The elements common to the two embodiments of the cartridge will thus be indicated with the same reference numbers.

As will be better explained below, the cartridge is suitable to be inserted in the body of a water socket 60.

In the following description, the terms "upper" and "lower" will refer to the cartridge oriented vertically, as in the drawings, and correspondingly to its preferred configuration for use in a water socket, with the electronic device facing down so to emit the light or sound effect in that same direction.

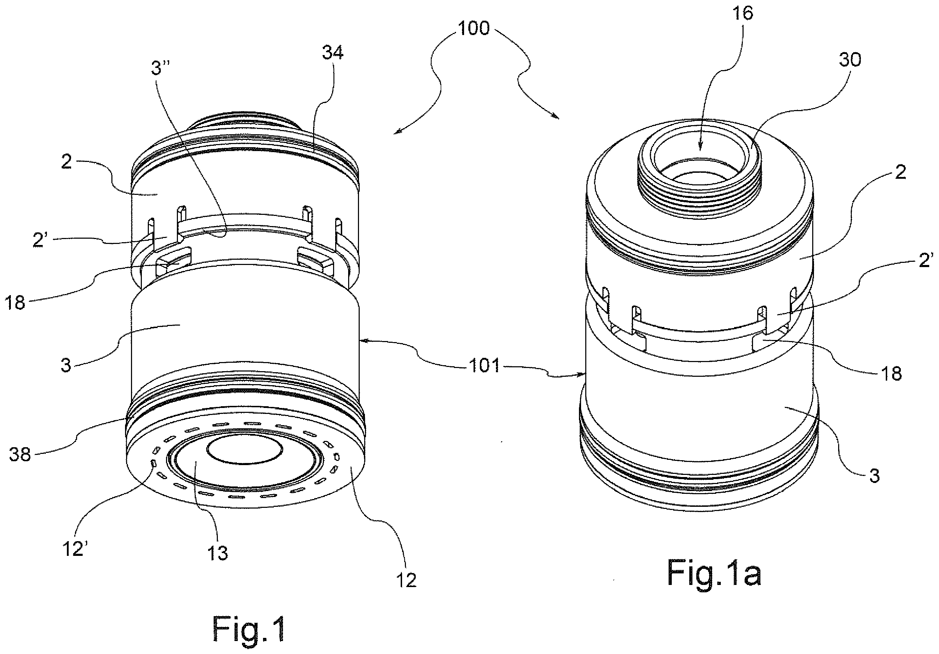

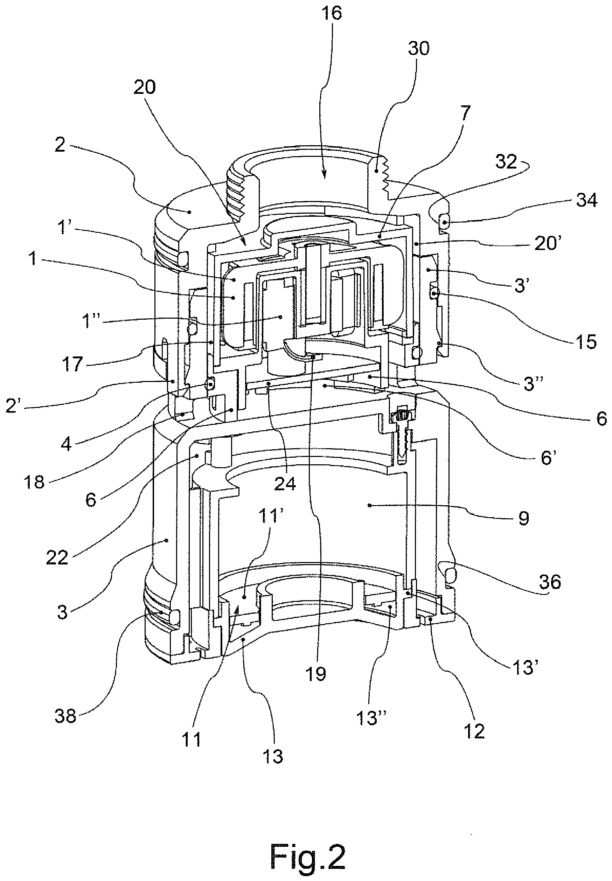

Figures 1, 1a and 2 show a cartridge 100 provided with a light source. In the continuation of the description, the term "light source" will be used to indicate both a single light source and a plurality of point light sources, for example of the LED type, activatable simultaneously, individually or in blocks according to a control program suitable to generate one or more desired light effects.

The cartridge 100 includes a cartridge body 101 defining a first compartment 20 and a second compartment 22. The second compartment 22 is separated from said first compartment 20 by a watertight separation septum 24. In the cartridge body 101 is formed an inlet opening 16, for the entry of a flow of water inside the first compartment 20, and at least one outlet opening 18 open to the outside for the outflow of the water flow from the first compartment 20. For example, the inlet opening 16 is formed in the upper end of the cartridge body 101, while a plurality of outlet openings 18 are formed at an intermediate portion of the cartridge body 101.

The first compartment 20 houses a current generator 1 suitable to be actuated by a flow of water passing through this first compartment 20 from the inlet opening 16 to the outlet opening 18. For example, the current generator 1 is a turbine generator. The flow of water entering the first compartment 20 actuates the blades 1' of the turbine, which command a dynamo 1" that generates electrical current.

The second compartment 22 houses the light source 11. In a preferred embodiment, said light source 11 comprises a plurality of LED point sources mounted on an electronic board 11'. The light source 11 is electrically powered by the current generator 1. The second compartment 22 is closed at the bottom by an optical element 13, for example of truncated-conical shape, suitable to allow the emission of a light beam emitted from the light source 11.

In a preferred embodiment, the cartridge body 101 has a parallelepiped shape, preferably substantially cylindrical. The first compartment 20 is superimposed on the second compartment 22 along a cartridge axis X. The inlet opening 16 and the optical element 13 are formed at opposite ends of the cartridge body 101. The outlet openings 18 are in the form of radial slits, distributed around said axis X of the cartridge, for example at an intermediate height between the opposite ends of the cartridge body 101 along the cartridge axis X.

In a preferred embodiment, the current generator 1 is inserted in a generator housing 7. Said generator housing 7 is housed watertight in the first compartment 20. Between the walls of the first compartment 20 and the outer walls of the generator housing 7 there is thus defined an inlet chamber 20', for example of annular shape. In said generator housing 7, there are inlet passages 17 for the flow of water coming from the inlet opening 16, and outlet passages in fluidic communication with the outlet openings 18.

In an embodiment, in which the rotation axis of the turbine 1' is coaxial with the axis X of the cartridge, said inlet passages 17 are formed in the lateral wall of the generator housing 7 and are configured as vertical or inclined slits suitable to push the flow of water in the inlet chamber 20' to the inside the generator housing 7 in a tangential direction with respect to the blades of the turbine 1'.

In an embodiment, the generator housing 7 rests on an annular base 6, for example resting directly on the separation septum 24. Outlet channels 6' are formed in said annular base 6, that put the outlet passages in fluidic communication with the outlet openings 18.

Turning now to the portion of the cartridge related to the light source, in a preferred embodiment, in the second compartment 22 is housed an optical element support 9, preferably of cylindrical shape, fixed, for example by means of screws 8 hidden by respective caps 8', to the cartridge body 101, preferably to the separation septum 24. To said optical support element 9 is connected, for example by means of screws, a lower cover 12 of annular shape. The optical element 13, in an embodiment comprising a transparent disc, occupies the axial opening defined by the lower cover 12. In an embodiment, this optical element 13 is provided with a radial shelf 13' retained between the optical element support 9 and the lower cover 12.

In an embodiment, the optical element 13 defines a board seat 13" in which the electronic board 11' is housed.

In a preferred embodiment, in the lower side of the lower cover 12 a plurality of apertures 12' are formed, for example distributed along a circumference, which are engaged by the teeth of a tool usable to screw/unscrew the cartridge 100 to/from the water socket 52, as it will be described below.

In an embodiment, the light source 11 is powered by the current generator through an electric cable 19.

In an embodiment, in the second compartment 22 is also housed a buffer battery - not shown - to power the light source 11. Said buffer battery is for example mounted on the electronic board 11'. The buffer battery is suitable to power the light source 11 even when the water flow is interrupted, for example for a predetermined period of time.

In an embodiment, the electronic board 11' is connected to a temperature sensor - not shown - suitable to measure the temperature of the water dispensed so as to control point light sources to emit light beams with a colour dependent on the temperature of the water.

According to the invention, the water inlet opening 16 is formed in a threaded neck 30 of the cartridge body 101 for the releasable connection of the cartridge 100 to the water socket 60, as described below.

In addition, in the lateral wall of the cartridge body 101, between the upper end of the body bearing the inlet opening 16 and the outlet openings 18, a first seat 32 is formed that houses a first outer seal element 34, for example an O-ring, suitable to cooperate with a wall of a cartridge seat formed in the water socket 60, as it will be described below.

Additionally, in the lateral wall of the cartridge body 101, in proximity of the lower end of the cartridge, there is formed a second seat 36 that houses a second outer seal element 38, for example an O-ring, suitable to cooperate with the device body 201 and, more precisely, with a wall of said body defining a secondary surface 218, as will be described below.

In the embodiment illustrated, the cartridge body 101 is made in two parts seal-coupled to each other. For example, the body is formed by a lower shell 3 which forms the second compartment 22, the separation septum and an intermediate portion in which the outlet openings 18 are formed. Said lower shell 3 terminates at the top with a tubular end portion 3' that partially forms the first compartment 20 and that has an outer surface configured for mating with an upper shell 2 that superiorly defines the first compartment 20. For example, in the lateral wall of the tubular end portion 3' is formed an undercut 3" suitable to be engaged, for example, with a snap-coupling method, by elastic teeth 2' formed in the lateral wall of the upper shell 2.

Between said upper 2 and lower 3 shells, a seal element 15, for example an O-ring, may be interposed. Between the annular base 6 and the tubular end portion 3', a further seal element 4 may be interposed.

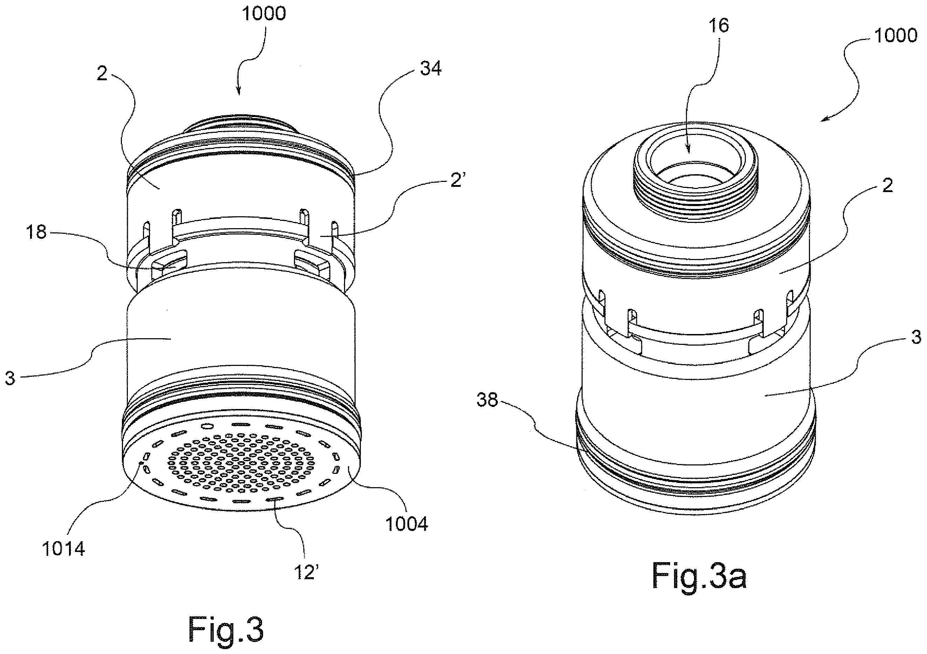

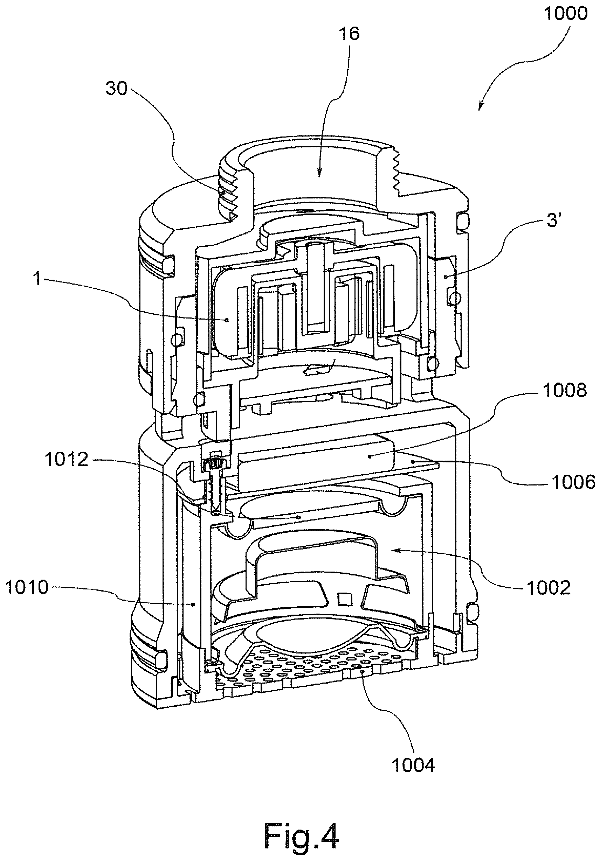

The speaker cartridge 1000 shown in Figures 3, 3a and 4 differs from the cartridge 100 for lighting effects only for the electronic device housed in the second compartment 22, in this case a speaker 1002, and for the separation element towards the outside.

The speaker 1002 is electrically powered by the current generator 1. The second compartment 22 communicates with the exterior through a perforated plate 1004 suitable to allow the emission of sound produced by the speaker.

In a preferred embodiment, in the second compartment 22 is housed an electronic board 1006 for driving the speaker. Said electronic board 1006 is provided with a receiver or, preferably, a transceiver of signals, suitable to communicate with a remote control unit - not shown - using a wireless data communication protocol, for example the "Bluetooth" protocol.

The electronic board 1006 is powered by the current generator, for example by means of an electric cable.

In an advantageous embodiment, in the second compartment 22 is also housed a buffer battery 1008 to power the speaker 1002 (through the electronic board 1006). Said buffer battery 1008 is for example mounted on the electronic board 1006. The buffer battery 1008 is suitable to power the speaker even when the water flow is interrupted, for example for a predetermined period of time.

In an embodiment, the speaker 1002 is inserted in a speaker housing 1010, a portion of which, for example upper, is formed from the membrane 1012 of the speaker 1002.

In an advantageous embodiment, the speaker cartridge 1000 also includes a microphone 1014, positioned for example on perforated plate 1004, connected to the electronic driver board 1006. Therefore, the speaker cartridge 1000 is also usable with telephone function.

In an advantageous embodiment, the speaker cartridge 1000 may further comprise one of more luminous signalling devices, arranged for example on the perforated plate 1004, connected to the electronic driver board 1006. Such signalling devices, such as by LED, may for example signal the operating state of the cartridge.

Advantageously, even the perforated plate 1004 is provided with a plurality of apertures 12' suitable to be engaged by the teeth 52 of a tool usable to screw/unscrew the speaker cartridge to/from the water socket 60.

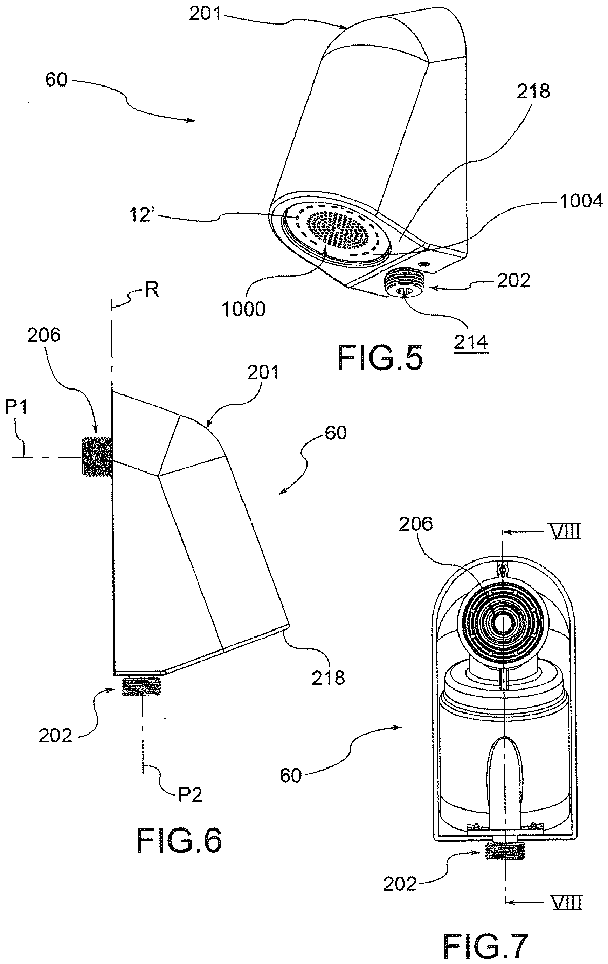

Figures 5 to 8 show an example of use of the speaker cartridge 1000 in the water socket 60, the latter connectable to, for example, a shower head or bidet shower.

Although the speaker cartridge is shown in these variants, it is clear that such water socket may be used with any cartridge body according to the preceding variants, independently of the electronic device housed therein.

In a general embodiment, the water socket 60 comprises a first water connection element 206 to a water supply pipe, a device body 201, and a second water connection element 202 fluidically connected with said first water connection element and defining at least one supply passage 214 of the dispensing device.

In the embodiment illustrated, at least one of the water connection elements 206, 202 comprises a hollow fitting, threaded on the inside or on the outside, for the connection to the supply pipe and/or a dispensing device of a jet of water. For example, one or both of these connections may be made via a hose.

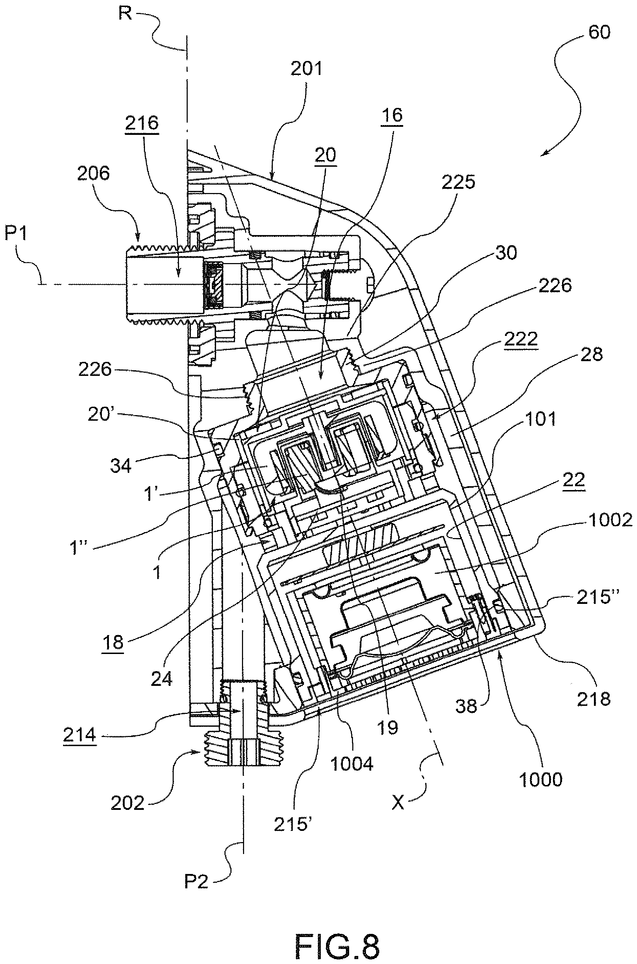

In the device body 201 is formed a cartridge seat 222 open toward the first water connection element 206 and in communication with the supply passage 214. In the cartridge seat 222 is housed one of the cartridges 100, 1000 described above (Figure 8).

In an embodiment, said cartridge seat 222 includes a tubular casing, preferably of a shape corresponding to the shape of the cartridge body 101, thus for example substantially cylindrical or cup- or bell-shaped, which extends within the device body 201 between the water connection elements 206, 202. In correspondence of the cartridge seat 222, the bottom of the cartridge body 101 has a cartridge opening 215' engaged by the lower part of the cartridge, as well visible in Figure 5.

The cartridge seat 222 comprises a lateral wall 28, with which the first outer seal element 34 of the cartridge cooperates, so that all the water that comes from the first water connection element 206 is channelled into the inlet opening 16 of the cartridge.

Downstream of the outlet openings 18, the bottom of the cartridge seat 222 sealingly engages the cartridge body 101, so that all water that comes out of the outlet openings 18 of the cartridge 100 enters the supply passage 214 to flow out through the second water connection 202. For example, the cartridge opening 215' has an edge 215" cooperating with the second outer seal element 38 of the cartridge.

In an embodiment, the lower end of the cartridge 100, 1000 lies slightly retracted or in undercut respect to the secondary surface 218 that circumscribes the cartridge opening 215'.

In a preferred embodiment, an upper portion of the cartridge seat 222, open towards the first water connection element 206, is delimited by a top wall 225 having an internally threaded cylindrical portion 226 in which the threaded neck 30 of the cartridge 100, 1000 is screwed. Therefore, to fix the cartridge 100, 1000 to the water socket 60 it is sufficient to insert the cartridge 100, 1000 in the cartridge seat 222 from below and screw the cartridge body 101 to said threaded cylindrical portion 226.

According to a non-illustrated embodiment, a tool may be further provided suitable to engage the lower side of the cartridge 100, 1000 to screw/unscrew the latter to/from the water socket. In an embodiment, the tool has a crown of teeth suitable to engage the apertures 12' formed in the lower cover 12.

The operation of the dispensing device with cartridge is as follows.

The flow of water entering in the dispensing device through the first water connection element 206 is channelled into the inlet opening 16 of the cartridge. The water then enters the inlet chamber and from here, through the inlet passages 17 present on the turbine casing 7, in the seat of the turbine, actuating it. The turbine 1 generates the current to power the electronic device housed in the second compartment 22.

The flow of water, after having passed the generator 1, exits the cartridge 100, 1000 through the outlet openings 18, downstream of the seal element 34 with the cartridge seat 222. All the water therefore flows in the supply passage 214 and exits through the second water connection element 202.

From there the water flow could be dispensed through one or more nozzles of the not shown dispensing device, connected to the second water connection element 202 through an intermediate duct, for example a hose.

The advantages of the invention are obvious.

First, the insertion of a cartridge for the generation of the secondary effect inside of a water socket, and not in a shower head, allows making the advantages of the invention available in any existing dispensing device through the mere connection to the water socket.

In addition to this, the integration of a current generator actuatable by the flow of water and of an electronic device inside of a cartridge has allowed optimising the overall dimensions and thus realising a particularly compact unit for generating a secondary effect. Although provided with a turbine generator, with the advantages deriving from it in terms of electrical autonomy and continuity of operation, such a compact cartridge does not significantly affect the shape and size of the water socket in which it is inserted.

In addition, such a cartridge is easily and quickly connectable to any water socket already assembled and prepared to accept it.

To the embodiments of the water socket and the cartridge according to the invention, a skilled person, to satisfy contingent requirements, may make modifications, adaptations and replacements of elements with others functionally equivalent, without departing from the scope of the following claims. Each of the characteristics described as belonging to a possible form of embodiment can be achieved independently from the other embodiments described.

## Claims

1. Water socket (60) for a dispensing device comprising a first water connection element (206) to a water supply pipe, a device body (201), and a second water connection element (202) fluidically connected with said first water connection element and defining at least one supply passage (214) of the dispensing device, wherein a cartridge seat (222) is obtained in said body that communicates with the first (206) and second (202) water connection element and that houses at least a cartridge (100, 1000), this latter comprising:
- a cartridge body (101), defining a first compartment (20) and a second compartment (22), said second compartment being separated from said first compartment by a watertight separation septum (24), an inlet opening (16) being formed in the cartridge body for the entry of a flow of water inside the first compartment (20), and at least one outlet opening (18) open to the outside for discharging the flow of water from the first compartment (20);
- a current generator (1) housed in the first compartment (20), said current generator being suitable to be actuated by a flow of water passing through said first compartment from the inlet opening to the outlet opening;
- at least an electronic device (11, 1002) housed in said second compartment (22) and suitable to generate a secondary effect perceptible by a user, said electronic device being powered electrically by the current generator, the second compartment (22) being separated from the external environment by a separation element (13, 1004) suitable to allow the transmission of said secondary effect to the exterior;
wherein the second water connection element (202) comprises a threaded hollow fitting for connection of a dispensing device in the form of a shower head or bidet shower through a hose;
said socket (60) being **characterized in that** the cartridge (100, 1000) is housed in the cartridge seat (222) in a releasable manner, the inlet opening (16) being formed in a threaded neck (30) of the cartridge body (101) for the releasable connection of the cartridge (100) to the water socket (60).

2. Water socket according to any of the preceding claims, wherein the threaded hollow fitting is threaded on the inside or on the outside of said fitting.

3. Water socket according to any of the preceding claims, wherein the first water connection element (206) comprises a hollow fitting, threaded on the inside or on the outside, for the connection of the supply pipe.

4. Water socket according to any of the preceding claims, wherein the supply passage (214), an inlet passage (216) identified by the first water connection element (206) and a cartridge axis (X) extend at least in part along mutually incident directions (P1, P2, X).

5. Water socket according to any of the preceding claims, in which the device body (201) defines an abutment plane (R) with a support surface, and defines a secondary surface (218) through which the secondary effect is transmitted to the exterior, said secondary surface (218) being oriented in a manner incident to said plane (R) so that the secondary effect is spread away from the latter.

6. Water socket according to any of the preceding claims, wherein the electronic device comprises a light source (11), the second compartment (22) being closed by an optical element (13) suitable to allow the emission of a light beam produced by the light source.

7. Water socket according to claims 1 to 5, wherein said electronic device comprises a speaker (1002), the second compartment (22) communicating with the exterior through a perforated plate (1004) suitable to allow the emission of sound from the speaker.

8. Water socket according to the preceding claim, wherein the at least one water outlet opening (18) is directed radially with respect to a cartridge axis (X), and wherein the inlet opening (16) and the separation element (13, 1004) are provided at opposite ends of the cartridge body.

9. Water socket according to any of the preceding claims, wherein the current generator (1) is inserted in a generator housing (7) provided with inlet passages (17), for the flow of water coming from the inlet opening, and outlet passages in fluidic communication with the at least one outlet opening (18).

10. Water socket according to any of the preceding claims when dependent on claim 5, wherein the light source (11) comprises a plurality of LED point sources mounted on an electronic board (11').

11. Water socket according to any of the preceding claims, wherein the second compartment houses a buffer battery (8, 1008) to power the electronic device (11, 1002) .

12. Water socket according to any of the preceding claims when dependent on claim 2, wherein a plurality of apertures (12') are formed in the lower side of the separation element (13, 1004), suitable to be engaged by the teeth of a tool usable to screw/unscrew the cartridge to/from the water socket (60).

13. Water socket according to any of the preceding claims, wherein the secondary effect comprises a light effect, a sound effect, an olfactory effect, a massaging effect and a treatment effect of the user with ultraviolet light.

## Patentansprüche

1. Wasserstutzen (60) für eine Abgabevorrichtung, welche ein erstes Wasserverbindungselement (206) mit einer Wasserversorgungsleitung, einen Vorrichtungskörper (201) und ein zweites Wasserverbindungselement (202) umfasst, welches fluidisch mit dem ersten Wasserverbindungselement verbunden ist und wenigstens einen Lieferdurchgang (214) der Abgabevorrichtung definiert, wobei ein Einsatzsitz (222) in dem Körper erhalten ist, welcher mit dem ersten (206) und dem zweiten (202) Wasserverbindungselement kommuniziert, und welcher wenigstens einen Einsatz (100, 1000) aufnimmt, wobei der Letztere umfasst:
- einen Einsatzkörper (101), welcher ein erstes Abteil (20) und ein zweites Abteil (22) definiert, wobei das zweite Abteil von dem ersten Abteil durch eine wasserdichte Trennwand (24) getrennt ist, wobei eine Einlassöffnung (16) in dem Einsatzkörper für den Eintritt eines Stroms von Wasser in das erste Abteil (20) und wenigstens eine Auslassöffnung (18) gebildet ist, welche zu der Außenseite zum Abgeben des Stroms von Wasser von dem ersten Abteil (20) offen ist;
- einen Stromgenerator (1), welcher in dem ersten Abteil (20) aufgenommen ist, wobei der Stromgenerator dazu geeignet ist, durch einen Strom von Wasser betätigt zu werden, welcher durch das erste Abteil von der Einlassöffnung zu der Auslassöffnung hindurchtritt;
- wenigstens eine elektronische Vorrichtung (11, 1002), welche in dem zweiten Abteil (22) aufgenommen ist und dazu geeignet ist, einen sekundären Effekt zu erzeugen, welcher durch einen Benutzer wahrnehmbar ist, wobei die elektronische Vorrichtung elektrisch durch den Stromgenerator angetrieben wird, wobei das zweite Abteil (22) von der externen Umgebung durch ein Trennelement (13, 1004) getrennt ist, welches dazu geeignet ist, die Transmission des sekundären Effekts an die Außenseite zu erlauben;
wobei das zweite Wasserverbindungselement (202) ein mit einem Gewinde versehenes hohles Fitting für eine Verbindung einer Abgabevorrichtung in der Form eines Duschkopfs oder einer Bidet-Dusche durch einen Schlauch umfasst;
wobei der Stutzen (60) **dadurch gekennzeichnet ist, dass** der Einsatz (100, 1000) in dem Einsatzsitz (222) in einer lösbaren Weise aufgenommen ist, die Einlassöffnung (16) in einem mit einem Gewinde versehenen Hals (30) des Einsatzkörpers (101) für die lösbare Verbindung des Einsatzes (100) mit dem Wasserstutzen (60) gebildet ist.

2. Wasserstutzen nach einem der vorhergehenden Ansprüche, wobei das mit einem Gewinde versehene hohle Fitting an der Innenseite oder an der Außenseite des Fittings mit dem Gewinde versehen ist.

3. Wasserstutzen nach einem der vorhergehenden Ansprüche, wobei das erste Wasserverbindungselement (206) ein hohles Fitting, welches an der Innenseite oder an der Außenseite mit einem Gewinde versehen ist, für die Verbindung der Versorgungsleitung umfasst.

4. Wasserstutzen nach einem der vorhergehenden Ansprüche, wobei sich der Versorgungsdurchgang (214), ein Einlass-Durchgang (216), welcher durch das erste Wasserverbindungselement (206) identifiziert wird, und eine Einsatzachse (X) wenigstens teilweise entlang gegenseitig einfallender Richtungen (P1, P2, X) erstrecken.

5. Wasserstutzen nach einem der vorhergehenden Ansprüche, in welchem der Vorrichtungskörper (201) eine Anlageebene (R) mit einer Tragefläche definiert und eine sekundäre Fläche (218) definiert, durch welche der sekundäre Effekt an die Außenseite übertragen wird, wobei die sekundäre Fläche (218) in einer Weise zu der Ebene (R) einfallend ist, so dass der sekundäre Effekt von der Letzteren weg ausgebreitet wird.

6. Wasserstutzen nach einem der vorhergehenden Ansprüche, wobei die elektronische Vorrichtung eine Lichtquelle (11) umfasst, wobei das zweite Abteil (22) durch ein optisches Element (13) verschlossen ist, welches dazu geeignet ist, die Emission eines Lichtstrahls zu erlauben, welcher durch die Lichtquelle produziert wird.

7. Wasserstutzen nach Ansprüchen 1 bis 5, wobei die elektronische Vorrichtung einen Lautsprecher (1002) umfasst, wobei das zweite Abteil (22) mit der Außenseite durch eine perforierte Platte (1004) kommuniziert, welche dazu geeignet ist, die Emission eines Geräuschs von dem Lautsprecher zu erlauben.

8. Wasserstutzen nach dem vorhergehenden Anspruch, wobei die wenigstens eine Wasser-Auslassöffnung (18) radial in Bezug auf eine Einsatzachse (X) gerichtet ist, und wobei die Einlassöffnung (16) und das Trennelement (13, 1004) an entgegengesetzten Enden des Einsatzkörpers bereitgestellt sind.

9. Wasserstutzen nach einem der vorhergehenden Ansprüche, wobei der Stromgenerator (1) in ein Generatorgehäuse (7) eingesetzt ist, welches mit Einlassdurchgängen (17) für den Strom aus Wasser, welcher von der Einlassöffnung kommt, und Auslassdurchgängen in fluidischer Kommunikation mit der wenigstens einen Auslassöffnung (18) bereitgestellt ist.

10. Wasserstutzen nach einem der vorhergehenden Ansprüche, wenn abhängig von Anspruch 5, wobei die Lichtquelle (11) eine Mehrzahl von LED-Punktquellen umfasst, welche an einer elektronischen Platine (11') angebracht sind.

11. Wasserstutzen nach einem der vorhergehenden Ansprüche, wobei das zweite Abteil eine Pufferbatterie (8, 1008) aufnimmt, um die elektronische Vorrichtung (11, 1002) anzutreiben.

12. Wasserstutzen nach einem der vorhergehenden Ansprüche, wenn abhängig von Anspruch 2, wobei eine Mehrzahl von Aperturen (12') in der unteren Seite des Trennelements (13, 1004) gebildet sind, welche dazu geeignet sind, durch die Zähne eines Werkzeugs eingegriffen zu werden, welches dazu verwendbar ist, den Einsatz an den Wasserstutzen (60) zu schrauben / von diesem ab zu schrauben.

13. Wasserstutzen nach einem der vorhergehenden Ansprüche, wobei der sekundäre Effekt einen Lichteffekt, einen Geräuscheffekt, einen olfaktorischen Effekt, einen Massageeffekt und einen Behandlungseffekt des Benutzers mit ultraviolettem Licht umfasst.

## Revendications

1. Prise d'eau (60) pour un dispositif de distribution comprenant un premier élément de raccordement d'eau (206) à un tuyau d'alimentation en eau, un corps de dispositif (201), et un second élément de raccordement d'eau (202) en communication fluidique avec ledit premier élément de raccordement d'eau et définissant au moins un passage d'alimentation (214) du dispositif de distribution, dans laquelle un siège de cartouche (222) est obtenu dans ledit corps qui communique avec les premier (206) et second (202) éléments de raccordement d'eau et qui accueille au moins une cartouche (100, 1000), cette dernière comprenant :
- un corps de cartouche (101), définissant un premier compartiment (20) et un second compartiment (22), ledit second compartiment étant séparé dudit premier compartiment par une cloison de séparation étanche à l'eau (24), une ouverture d'entrée (16) étant formée dans le corps de cartouche pour l'entrée d'un écoulement d'eau à l'intérieur du premier compartiment (20), et au moins une ouverture de sortie (18) ouverte sur l'extérieur pour l'évacuation de l'écoulement d'eau à partir du premier compartiment (20) ;
- un générateur de courant (1) accueilli dans le premier compartiment (20), ledit générateur de courant étant adapté à être actionné par l'écoulement d'eau traversant ledit premier compartiment de l'ouverture d'entrée à l'ouverture de sortie ;
- au moins un dispositif électronique (11, 1002) logé dans ledit second compartiment (22) et adapté à générer un effet secondaire perceptible par un utilisateur, ledit dispositif électronique étant alimenté électriquement par le générateur de courant, le second compartiment (22) étant séparé de l'environnement externe par un élément de séparation (13, 1004) adapté à permettre la transmission dudit effet secondaire à l'extérieur ;
dans laquelle le second élément de raccordement d'eau (202) comprend un raccord creux fileté pour le raccordement d'un dispositif de distribution sous la forme d'une tête de douche ou d'une douche de bidet par le biais d'un tuyau flexible ;
ladite prise (60) étant **caractérisée en ce que** la cartouche (100, 1000) est accueillie dans le siège de cartouche (222) d'une manière amovible, l'ouverture d'entrée (16) étant formée dans un col fileté (30) du corps de cartouche (101) pour le raccordement amovible de la cartouche (100) à la prise d'eau (60).

2. Prise d'eau selon l'une quelconque des revendications précédentes, dans laquelle le raccord creux fileté est fileté sur l'intérieur ou sur l'extérieur dudit raccord.

3. Prise d'eau selon l'une quelconque des revendications précédentes, dans laquelle le premier élément de raccordement d'eau (206) comprend un raccord creux, fileté sur l'intérieur ou sur l'extérieur, pour le raccordement du tuyau d'alimentation.

4. Prise d'eau selon l'une quelconque des revendications précédentes, dans laquelle le passage d'alimentation (214), un passage d'entrée (216) identifié par le premier élément de raccordement d'eau (206) et un axe de cartouche (X) s'étendent au moins en partie le long de directions mutuellement incidentes (P1, P2, X).

5. Prise d'eau selon l'une quelconque des revendications précédentes, dans laquelle le corps de dispositif (201) définit un plan de butée (R) doté d'une surface de support, et définit une surface secondaire (218) à travers laquelle l'effet secondaire est transmis à l'extérieur, ladite surface secondaire (218) étant orientée d'une manière incidente audit plan (R) de sorte que l'effet secondaire est écarté de ce dernier.

6. Prise d'eau selon l'une quelconque des revendications précédentes, dans laquelle le dispositif électronique comprend une source de lumière (11), le second compartiment (22) étant fermé par un élément optique (13) adapté à permettre l'émission d'un faisceau de lumière produit par la source de lumière.

7. Prise d'eau selon l'une quelconque des revendications 1 à 5, dans laquelle ledit dispositif électronique comprend un haut-parleur (1002), le second compartiment (22) communiquant avec l'extérieur à travers une plaque perforée (1004) adaptée à permettre l'émission de son à partir du haut-parleur.

8. Prise d'eau selon la revendication précédente, dans laquelle l'au moins une ouverture de sortie d'eau (18) est dirigée radialement par rapport à un axe de cartouche (X), et dans laquelle l'ouverture d'entrée (16) et l'élément de séparation (13, 1004) sont disposés au niveau d'extrémités opposées du corps de cartouche.

9. Prise d'eau selon l'une quelconque des revendications précédentes, dans laquelle le générateur de courant (1) est inséré dans un logement de générateur (7) doté de passages d'entrée (17), pour l'écoulement d'eau provenant de l'ouverture d'entrée, et de passages de sortie en communication fluidique avec l'au moins une ouverture de sortie (18).

10. Prise d'eau selon l'une quelconque des revendications précédentes qui dépendent de la revendication 5, dans laquelle la source de lumière (11) comprend une pluralité de sources ponctuelles à DEL montées sur une carte électronique (11').

11. Prise d'eau selon l'une quelconque des revendications précédentes, dans laquelle le second compartiment accueille une batterie tampon (8, 1008) pour alimenter le dispositif électronique (11, 1002).

12. Prise d'eau selon l'une quelconque des revendications précédentes qui dépendent de la revendication 2, dans laquelle une pluralité d'ouvertures (12') est formée dans le côté inférieur de l'élément de séparation (13, 1004), adaptée à être mise en prise par les dents d'un outil pouvant être utilisé pour visser/dévisser la cartouche sur/de la prise d'eau (60).

13. Prise d'eau selon l'une quelconque des revendications précédentes, dans laquelle l'effet secondaire comprend un effet lumineux, un effet sonore, un effet olfactif, un effet de massage et un effet de traitement de l'utilisateur avec une lumière ultraviolette.
